(19) Europäisches Patentamt

European Patent Office

Office européen des brevets

(11) **EP 1 099 958 B1**

(12) **FASCICULE DE BREVET EUROPEEN**

(45) Date de publication et mention
de la délivrance du brevet:
**25.01.2006   Bulletin 2006/04**

(51) Int Cl.:
*G01S 7/52* *(2006.01)*     *G01S 3/808* *(2006.01)*

(21) Numéro de dépôt: **00403111.8**

(22) Date de dépôt: **09.11.2000**

(54) **Procédés et dispositifs associés de détermination de la forme d'une antenne linéaire et de lever d'ambiguité conique**

Verfahren und Gerät zur Bestimmung der Form einer linearen Antenna und zur Auflösung der Richtungsmehrdeutigkeit

Method and device to determine the shape of a linear antenna and resolve its directional ambiguity

(84) Etats contractants désignés:
**DE FR GB NL SE**

(30) Priorité:   **09.11.1999   FR 9914038**

(43) Date de publication de la demande:
**16.05.2001   Bulletin 2001/20**

(73) Titulaire: **DCN**
**75015 Paris (FR)**

(72) Inventeurs:
• **Espinasse, Laurent**
**83500 La Seyne sur Mer (FR)**
• **Jespers, Stephane**
**83190 Ollioules (FR)**

(74) Mandataire: **Jacobson, Claude et al**
**Cabinet Lavoix**
**2, Place d'Estienne d'Orves**
**75441 Paris Cedex 09 (FR)**

(56) Documents cités:
**EP-A- 0 600 242          EP-A- 0 782 010**
**DE-A- 3 910 906          FR-A- 2 727 765**
**FR-A- 2 771 532**

**Description**

La présente invention concerne le domaine du traitement du signal et a plus particulièrement pour objet un procédé apte à compenser les déformations d'une chaîne linéaire mobile de capteurs.

Des chaînes linéaires de capteurs sont notamment utilisées dans le domaine des sonars.

Dans ce domaine, il est connu d'utiliser des antennes linéaires électroacoustiques remorquées, comme par exemple celle décrite dans le brevet EP 782010 et qui est constituée par des moyens de génération d'au moins un signal, des moyens de transmission de ce signal à des transducteurs d'émission disposés dans une gaine étanche dans le prolongement de laquelle sont disposés des transducteurs de réception de signaux reliés à des moyens de traitement des signaux reçus par les dits transducteurs de réception.

Les transducteurs d'émission sont maintenus par des câbles à un intervalle fixe correspondant à la fréquence d'émission.

On connaît d'autres antennes linéaires remorquées comme, par exemple, celles comportant uniquement des moyens de réception de signaux et des moyens de traitement de ces signaux, ou bien encore celles comportant des transducteurs pouvant être utilisés aussi bien en réception qu'en émission et qui sont reliés à des moyens de génération d'au moins un signal ainsi qu'à des moyens de traitement des signaux reçus par les dits transducteurs de réception.

Lorsque les signaux issus des transducteurs de l'antenne sont représentés en domaine de fréquence et déphasés ou retardés de façon appropriée dans une direction particulière, on obtient une réponse maximale dans cette direction.

Cette réponse maximale peut être obtenue avec un dispositif de formation de voies.

Les dispositifs de formation de voies à déphasage sont généralement utilisés du fait de la possibilité d'utiliser des transformées de Fourier et de la rapidité de traitement ainsi obtenue. Ils permettent d'estimer le gisement ainsi que la distance d'une cible, aussi appelé bruiteur, avec une bonne précision lorsque l'antenne est parfaitement rectiligne.

Cependant, une antenne linéaire remorquée par un tracteur, par exemple un bateau ou un sous-marin, et qui mesure plusieurs dizaines de mètres ne reste pas rectiligne lors de son déplacement à cause des forces mécaniques qui s'exercent sur elle, comme celles dues aux variations de vitesse et/ou de cap du tracteur ou des mouvements du fluide, en l'occurrence l'eau pour les sonars, dans lequel elle est tractée.

Or, cette déformation de l'antenne engendre de nombreux inconvénients, comme :

- La dégradation du diagramme de directivité de l'antenne et plus particulièrement l'élargissement du lobe principal qui rend le pistage des bruiteurs plus aléatoire, ainsi qu'un accroissement des lobes secondaires entraînant des pertes de détection.

- une perte du contact avec des bruiteurs faibles due à la perte de gain de l'antenne.

A ce jour, différents procédés ont été proposés pour pallier ces inconvénients. Ainsi, on peut citer ceux qui font appel à des dispositifs extérieurs, comme ceux fonctionnant par télémétrie et qui utilisent des détecteurs acoustiques régulièrement répartis le long de l'antenne et qui détectent des ondes acoustiques émises par le tracteur. Le traitement, notamment par triangularisation, des signaux reçus par ces détecteurs, permet de déterminer la forme de l'antenne.

On connaît aussi l'utilisation de capteurs magnétiques régulièrement répartis dans l'antenne et le traitement des signaux émis par ces capteurs permet de déterminer la forme de l'antenne, par exemple comme décrit dans la demande de brevet européen EP 0 600 242.

Ces procédés présentent l'inconvénient de nécessiter d'importantes modifications des antennes existantes pour être implantés.

Pour diminuer le nombre de modifications à réaliser, il est connu d'utiliser quelques capteurs magnétiques, ainsi que d'une modélisation de la déformation de l'antenne au niveau des moyens de traitement des signaux émis par ces derniers.

Toutefois, ce procédé à l'inconvénient de nécessiter, avant son utilisation opérationnelle, de nombreuses expériences afin de définir une modélisation adéquate de la forme de l'antenne.

Le but de l'invention est de remédier à ces inconvénients en proposant un procédé apte à déterminer la forme d'une antenne linéaire sans nécessiter l'adjonction de moyens au niveau de l'antenne, donc sans qu'il soit nécessaire de la modifier.

La solution apportée est un procédé de détermination de la forme d'une antenne linéaire (3) de longueur La et tractée dans un fluide, cette antenne comportant des capteurs acoustiques (H1...Hn) répartis le long de cette antenne (3) et recevant des signaux et connectés à des moyens de traitement des signaux issus de ces capteurs, caractérisé en ce qu'il consiste:

- à définir un nombre N de segments d'antenne $S_1$ à $S_N$ consécutifs de longueur respective $L_1$ à $L_N$ avec N>=2 et préférentiellement, $\sum_{1}^{N} L(S_k)>=La,$

- à former, pour chaque segment $S_1$ à $S_N$, des voies $V_{i1}$ à $V_{iN}$ en gisement à partir des signaux des capteurs d'un même segment, de la position des capteurs sur l'antenne, de la fréquence et de la célérité des ondes dans le fluide,

- à calculer, pour chaque couple de segments $S_k$, $S_{k+1}$, et pour chaque voie $V_{ik}$, l'interspectre en fonction du temps et de la fréquence,

- à calculer pour chaque couple de segments $S_k$, $S_{k+1}$, et pour chaque voie $V_{ik}$, la différence d'angle de colinéarité $\Phi co_{k/k+1}$ entre les deux segments puis à déterminer la forme complète de l'antenne à partir des différences d'angle de colinéarité ainsi calculées.

Selon une caractéristique particulière permettant de réduire les temps de calcul, ladite formation de voie est une formation de voies spectrales.

Selon une caractéristique additionnelle, la formation de voies par gisement est effectuée selon la relation suivante

$$V_{ik}(f,t) = \sum_{j=1}^{n(k)} S_j(f,t) . \, e^{-j2\pi \cos(\theta_i).L.f/c}$$

Où:

$Vi_k(f,t)$ est la puissance de la voie i considérée pour le segment k à la fréquence f et à l'instant

$S_j(f,t)$ : le signal reçu par l'hydrophone j considéré à la fréquence f et l'instant

$\theta_i$ est le gisement de la voie i considérée par rapport à l'avant de l'antenne

L : la distance en mètres séparant l'hydrophone considéré d'un hydrophone constituant l'origine des distances,

f: fréquence à laquelle la voie est recherchée,

c : célérité du son dans le milieu dans lequel baigne l'antenne.

Selon une autre caractéristique additionnelle, chaque voie formée est sous la forme d'une suite de nombres complexes et l'étape de calcul, pour chaque couple de segments $S_k$, $S_{k+1}$, et pour chaque voie, de l'interspectre, consiste à multiplier, pour chaque voie $V_{ik}(f,t)$ et pour chaque couple de segments consécutifs k et k+1, les nombres complexes de la voie formée du segment k par les nombres complexes conjugués de la voie formée du segment consécutif k+1 aux fréquences et instants correspondants.

Selon une autre caractéristique additionnelle le calcul pour chaque couple de segments $S_k$, $S_{k+1}$, et pour chaque voie $V_{ik}$, de la différence d'angle de colinéarité $\Phi CO_{k/k+1}$ entre les deux segments consiste à extraire l'argument $\psi_{k/k+1}$ du résultat du produit desdits nombres complexes, cet argument étant fonction de la différence de phase entre les capteurs des deux segments, et à calculer la différence d'angle de colinéarité avec la relation suivante :

$$\Phi co_{k/k+1} = \arccos(1/2\pi. \cos(\psi_{k/k+1}). \, c \, /( \, f/Ls)) \qquad (2)$$

Où Ls est la longueur d'espacement entre les deux segments k et k+1.

Selon une autre caractéristique additionnelle, le procédé comporte une étape consistant à pondérer, pour chaque couple de segments $S_k$, $S_{k+1}$, et pour chaque voie, la différence d'angle de colinéarité $\Phi_{COk/k+1}$ par la puissance de la voie correspondante, cette étape pouvant consister à pondérer, pour chaque couple de segments $S_k$, $S_{k+1}$, et pour chaque voie, la différence d'angle de colinéarité, par la norme du résultat du produit desdits nombres complexes. Il peut en outre comporter une étape de seuillage de la norme du résultat du produit desdits nombres complexes.

Selon d'autres caractéristiques, le procédé comporte une étape consistant à calculer, pour chaque voie, le bruit moyen sur toutes les fréquences et pour chaque fréquence le rapport signal sur bruit R et peut comporter une étape de calcul de la torsion entre segment à partir de la relation suivante :

$$T_{k/k+1}= \sum{}^{f} \sum{}^{t} (R.\ arccos(1/2\pi.\ cos(\psi_{k/k+1}).\ c\ /(\ f/L)))\ /\ \sum{}^{f} \sum{}^{t} R$$

Où R est le rapport signal sur bruit moyen,
et éventuellement une étape finale de paramètrage de forme de l'antenne, par exemple sous la forme d'un arc de cercle

L'invention concerne aussi un procédé pour lever l'ambiguïté d'une antenne linéaire de longueur La et tractée dans un fluide, cette antenne comportant des capteurs acoustiques (H1...Hn) répartis le long de cette antenne et recevant des signaux et connectés à des moyens de traitement des signaux issus de ces capteurs, caractérisé en ce qu'il consiste :

- à déterminer la forme de l'antenne,

- à former des voies sur des gisements situés de part et d'autre de l'antenne

- à détecter les bruiteurs Bn,

- à comparer, pour chaque bruiteur, les deux valeurs de puissance, l'une détectée d'un côté de l'antenne et l'autre de l'autre côté, puis à ne retenir que celle présentant la valeur la plus élevée, cette dernière correspondant au côté où se trouve réellement le bruiteur, l'étape de sélection des bruiteurs pouvant être effectuée par seuillage du rapport signal sur bruit.

L'invention concerne aussi un dispositif pour déterminer la forme d'une antenne remorquée et tractée dans un fluide, cette antenne comportant des capteurs acoustiques (H1...Hn) répartis le long de cette antenne et recevant des signaux et connectés à des moyens de traitement des signaux issus de ces capteurs, caractérisé en ce qu'il comporte des moyens de formation de voies pour au moins deux segments consécutifs ou en partie seulement confondus de l'antenne et comportant chacun au moins deux capteurs acoustiques, des moyens de calcul des interspectres entre ces au moins deux segments et des moyens aptes à déterminer, à partir des informations contenues dans les interspectres, la différence d'angle de colinéarité entre ces au moins deux de segments.

L'invention concerne en outre un dispositif pour lever l'ambiguïté d'une antenne linéaire tractée dans un fluide, cette antenne comportant des capteurs acoustiques (H 1... Hn) répartis le long de cette antenne et recevant des signaux et connectés à des moyens de traitement des signaux issus de ces capteurs, caractérisé en ce qu'il comporte des moyens aptes à déterminer la forme de l'antenne, des moyens de formation de voies sur des gisements situés de part et d'autre de l'antenne, des moyens de détection des bruiteurs, des moyens de comparaison, pour chaque bruiteur, des deux valeurs de la puissance issue des voies, l'une détectée d'un côté de l'antenne et l'autre de l'autre côté.

D'autres avantages et caractéristiques apparaîtront dans la description d'un mode particulier de réalisation de l'invention appliqué à un sonar au regard des figures annexées parmi lesquelles :

- La figure 1 présente l'environnement de l'invention dans le cadre du mode de réalisation décrit,

- La figure 2 schématise les moyens généraux constitutifs de l'invention,

- La figure 3 est un schéma des éléments composant l'invention dans ce mode de réalisation,

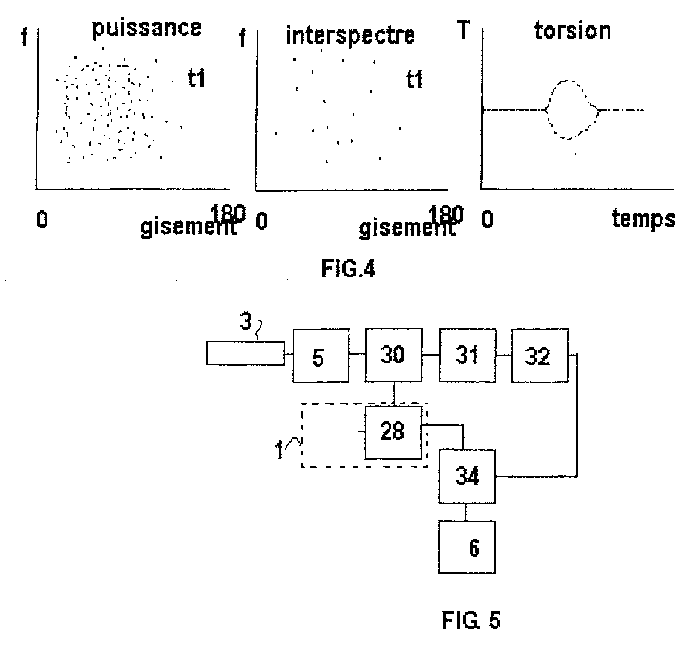

- La figure 4 présente des exemples de graphes visualisables à la sortie de certains moyens appartenant à l'invention,

- La figure 5 est un schéma des moyens de lever d'ambiguïté appliqués à un sonar existant en complément de l'invention.

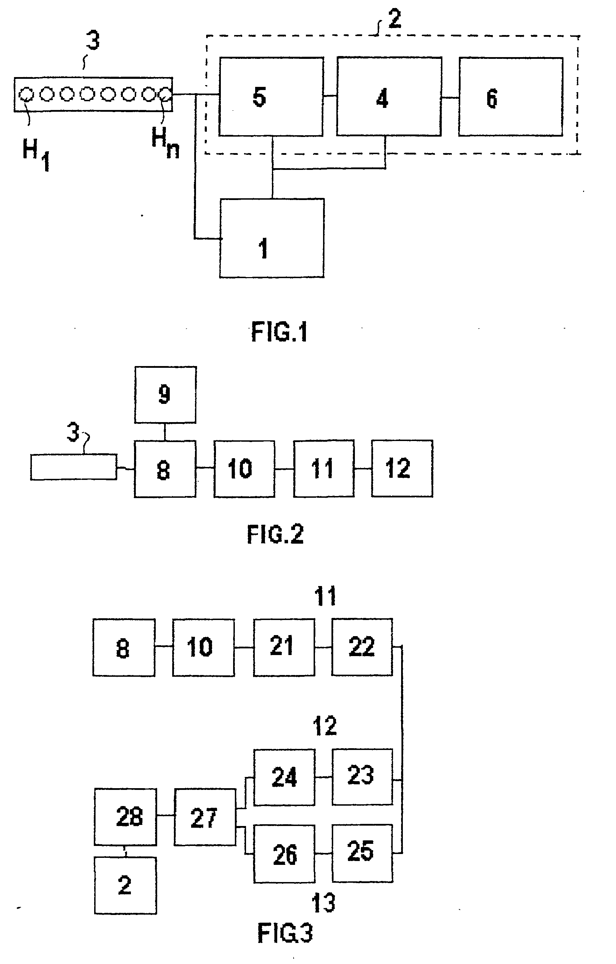

La figure 1 présente l'environnement des moyens 1 de mise en oeuvre de l'invention appliquée à un sonar passif existant 2.

Le sonar passif 2 comporte, de façon connue, des hydrophones H1 à Hn, soit n hydrophones régulièrement répartis le long d'une antenne remorquée 3, une baie d'interface 5 entre l'antenne et le navire qui la tracte, des moyens de traitement 4 des signaux issus de l'antenne et des moyens 6 de visualisation des informations issues du traitement.

La baie d'interface 5 comporte généralement des moyens de conversion analogique/numérique et des moyens de multiplexion.

Les moyens de traitement 4 consistent essentiellement en un dispositif de formation de voies et d'analyse spectrale. Dans cet exemple de réalisation, c'est un dispositif de formation de voies spectrales dans lequel les signaux issus des hydrophones sont convertis en informations cohérentes de localisation de bruiteurs.

Pour cela, et pour chaque voie correspondant à une direction particulière par rapport à celle de l'antenne, la transformée de Fourier du signai de chacun des hydrophones est déphasée, ce déphasage dépendant de la position de l'hydrophone dans l'antenne et du gisement θ la voie considérée. Les signaux ainsi déphasés sont ensuite sommés.

Cette sommation conduit, pour chaque voie, à un signal de puissance dans une direction donnée et l'exploitation des différentes voies permet notamment de localiser les bruiteurs en azimut en fonction du temps.

Pour ce qui est des moyens de visualisation, les données fournies par un sonar passif s'inscrivent généralement dans un hypervolume à cinq dimensions : temps, distance, azimut, fréquence, rapport signal/bruit.

Ces données sont présentées à un opérateur :

- sous forme d'images de formats classiques figés, ne restituant que trois dimensions de volume par image:

    - au format azimut-temps qui présente le défilement azimutal des bruiteurs détectés et pistés grâce aux traitements spatiaux et fréquentiels exécutés dans la partie "amont" du récepteur du sonar, avec codage du rapport signal/bruit par la luminosité.
    - au format dit "lofagramme", ou "lofar", qui présente dans un secteur d'horizon correspondant à une voie formée par le traitement spatial, l'information fréquence en fonction du temps avec codage du rapport signal/bruit par la luminosité. L'opérateur pourrait disposer, pour couvrir les 360° d'azimut, d'autant d'images "lofar" élémentaires que de voies, ce qui nécessite une surface d'écran importante matérialisée par l'utilisation d'au moins deux écrans,
    - au format dit "instantané azimut-fréquence" qui présente l'information fréquence en fonction de l'azimut pour l'instant présent ou après une intégration temporelle fixe, avec codage du rapport signal/bruit par la luminosité.

- sous forme d'images de formats particuliers comme ceux décrits dans le brevet FR9712430.

Les moyens de mise en oeuvre de l'invention qui peuvent être les mêmes que ceux du sonar, sont constitués, dans ce mode de réaliation, par des seconds moyens de traitement.

Ils comportent :

- une baie d'interface 8 comportant des moyens de conversion analogique/numérique et des moyens de multiplexion.
- des moyens 9 de sélection d'un nombre N au moins égal à deux, de segments consécutifs de l'antenne, chaque segment comportant au moins deux hydrophones,
- pour chacun des segments, des moyens 10 de formation de voies spectrales pour les signaux issus des hydrophones de ces segments,
- des moyens 11 de calcul des interspectres pour chacun des couples de segments consécutifs k et k+1,
- des moyens 12 aptes à déterminer, à partir des informations contenues dans les interspectres, la différence d'angle de colinéarité entre chacun des couples de segments.

Les moyens 9 de sélection sont facultatifs, puisqu'il est possible d'attribuer arbitrairement une valeur N de nombre de segments, par exemple égal à 10, et de gérer les signaux issus des hydrophones de façon à former des voies pour chacun des N segments.

Les moyens 10 de formation des voies sont de type connu. Ils appliquent, dans ce mode de réalisation la formule suivante pour chacun des hydrophones H1 à Hj d'un même segment d'antenne:

$$V_{ik}(f,t) = \sum_{j=1}^{n(k)} S_j(f,t).\, e^{-j2\pi \cos(\theta_i).l\, f/c} \qquad (1)$$

Où:

$V_{ik}(f,t)$ est la puissance de la voie i considérée à la fréquence f et au temps t pour le segment k

$S_j(f,t)$ : le signal reçu par l'hydrophone considéré à la fréquence f et au temps t

$\theta_i$ est le gisement de la voie i considérée par rapport à l'avant de l'antenne

I: la distance en mètres séparant l'hydrophone considéré d'un hydrophone constituant l'origine des distances,

f: est la fréquence à laquelle la voie est recherchée,

t: est l'instant de mesure,

c : célérité du son dans le milieu dans lequel baigne l'antenne.

Les moyens 11 de calcul des interspectres sont constitués par des premiers moyens 21 aptes à calculer pour chaque couple de segments consécutifs k et k+1, les nombres complexes conjugués de chacune des voies $V_{ik+1}(f,t)$ correspondant au segment k+1 et par des seconds moyens 22 aptes à calculer le produit, pour chaque voie $V_{ik}(f,t)$ et pour chaque couple de segments consécutifs k et k+1, des nombres complexes de la voie formée du segment k par les nombres complexes conjugués de la voie formée du segment consécutif k+1 aux fréquences et instants correspondants.

On obtient alors une valeur du type :

$r. e^{-j\psi}{}_{k/k+1}$

Où

r est représentatif de la puissance des bruiteurs,

et $\psi_{k/k+1}$ est représentatif de la différence de phase entre les hydrophones des deux segments considérés k et k+1.

Les moyens 12 aptes à déterminer à partir des informations contenues dans les interspectres, de la différence d'angle de colinéarité entre chacun des couples de segments, comportent un extracteur 23 de l'argument $\psi_{k/k+1}$ et des moyens 24 de calcul de la différence d'angle de colinéarité $\Phi_{COk+1}$ entre chacun des segments k et k+1 à partir de la valeur $\psi_{k/k+1}$ selon la formule suivante :

$$\Phi co_{k/k+1} = \arccos(1/2\pi. \cos(\psi_{k/k+1}). c /( f/Ls)) \qquad (2)$$

Où Ls est la longueur d'espacement entre les deux segments k et k+1.

Des moyens 13 de pondération des valeurs de différence d'angle de colinéarité $\Phi CO_{k/k+1}$ sont associés aux moyens 12 précédemment décrits.

Ces moyens 13 de pondération comportent d'une part des premiers moyens 25 aptes à calculer, à chaque récurrence de temps, la moyenne du bruit en fonction de la fréquence puis à calculer le rapport signal sur bruit R des bruiteurs à partir de la valeur r et de celle de la moyenne du bruit B et d'autre part des moyens de seuillage 26 qui permettent d'éliminer tous les bruiteurs dont le rapport signal sur bruit moyen n'est pas supérieur à une valeur prédéterminée, et ainsi de ne sélectionner que les bruiteurs dits d'opportunité. Pour cela, et de façon connue, soit un test élimine toutes les valeurs du rapport signal/bruit inférieures à une certaine valeur, soit on attribue au niveau du seuillage un poids égal à zéro pour ces valeurs.

Il est à noter que l'invention comporte des moyens de sélection manuelle des bruiteurs d'opportunité après seuillage.

Les moyens de l'invention comportent en outre des moyens 27 aptes à déterminer une torsion moyenne $T_{k/k+1}$ de l'antenne entre deux segments k et k+1 consécutifs. Pour cela, ces moyens consistent en des moyens de sommation sur toutes les fréquences et sur un certain nombre prédéterminé ou réglable t de récurrences de temps de la somme des angles de colinéarité pondérés par le rapport signal sur bruit du bruiteur Bn et divisé par la somme des pondérations soit :

$$T_{k/k+1}(Bn)=\sum{}^{f} \sum{}^{t} (R. \Phi co_{k/k+1} ) / \sum{}^{f} \sum{}^{t} R \qquad (3)$$

Dans cet exemple de réalisation les moyens 27 aptes à déterminer une torsion moyenne $T_{k/k+1}(Bn)$ de l'antenne entre deux segments consécutifs sont reliés à des moyens 28 aptes à calculer la forme de l'antenne sur toute sa longueur par bruiteur Bn et, éventuellement à calculer une valeur statistique de la torsion de l'antenne pour plusieurs bruiteurs Bn ou à paramétrer ladite forme.

Selon une caractéristique préférentielle de l'invention, les moyens 27 ou 28 sont connectés aux moyens de traitement 4 des signaux issus des hydrophones de l'antenne.

Ces moyens de traitement 4 sont principalement de type connu et comportent des moyens 30 de formation de voies sur 360°, qui appliquent, dans ce mode de réalisation la formule suivante pour chacun des hydrophones H1 à Hn de l'antenne :

$$V_i(f,t) = \sum_{j=1}^{n} S_j(f,t).\ e^{-j2\pi\ [l/X\cos(\theta_i)\ +(1-\cos(l/X)\ \sin(\theta_i))].L.f/c} \qquad (4)$$

Où:

$V_i(f,t)$ est la puissance de la voie i considérée pour l'antenne à la fréquence f et l'instant t

$S_j(f,t)$ : le signal reçu par l'hydrophone j considéré à la fréquence f et à l'instant t

X: est le rayon de courbure moyen de l'antenne

l : la distance en mètres séparant l'hydrophone considéré d'un hydrophone constituant l'origine des distances,

$\theta_i$ est le gisement de la voie considérée par rapport à l'avant de l'antenne

$[l/X\cos(\theta i)\ +(1-\cos(l/X)\ \sin(\theta_i))]$ est le retard en distance généré par la torsion de l'antenne,

f: fréquence à laquelle la voie est recherchée,

c : célérité du son dans le milieu dans lequel baigne l'antenne

L: l'espacement inter-hydrophonique

Les moyens 4 comportent en outre des moyens 31 aptes à calculer, à chaque récurrence de temps, la moyenne du bruit en fonction de la fréquence puis à calculer le rapport signal sur bruit R des bruiteurs à partir de la valeur de leur puissance r et de celle de la moyenne du bruit B.

Des moyens de seuillage 32 permettent d'éliminer tous les bruiteurs dont le rapport signal sur bruit moyen n'est pas supérieur à une valeur prédéterminée, et ainsi de ne sélectionner que les bruiteurs dits d'opportunité. Pour cela, et de façon connue, soit un test élimine toutes les valeurs du rapport signal/bruit inférieures à une certaine valeur, soit on attribue au niveau du seuillage un poids égal à zéro pour ces valeurs.

Les moyens de seuillage 32 sont connectés à des moyens 34 de comparaison des bruiteurs entre la droite et la gauche de l'antenne. Ceux-ci sont constitués par un comparateur de la valeur, pour un même bruiteur détecté comme étant soit à droite soit à gauche de l'antenne, du rapport de la puissance entre la gauche et la droite de l'antenne, la valeur la plus élevée correspondant au côté (droit ou gauche) réel du bruiteur, donc de lever l'ambiguïté.

Il est alors possible de ne visualiser sur les moyens de visualisation 6 que la position des bruiteurs et non plus leur symétrique par rapport à l'axe de l'antenne.

Le fonctionnement du dispositif précédemment décrit est le suivant.

On commence par sélectionner éventuellement des paramètres, comme :

- le nombre de segments N et éventuellement leur(s) longueur(s), ces derniers pouvant se chevaucher,

- le nombre de récurrences sur lequel s'effectuera le calcul de la valeur moyenne de la torsion.

Les signaux $S_j(t)$ issus des n hydrophones sont digitalisés et démultiplexés dans la baie d'interface 5 et transmis, par groupes d'hydrophones H1(k) à Hj(k) appartenant à un même segment k, aux moyens 10 de formation de voies 10 qui appliquent la formule (1). On calcule la transformée de Fourier $S_j(f,t)$ de chaque hydrophone et ensuite chaque voie $V_{ik}$ est calculée sous la forme d'une suite de nombres complexes du type (a+bj).

Les voies $V_{ik}$ issues des moyens de formation de voies sont ensuite traitées par les moyens 11 de calcul des interspectres entre chacun des couples de segments consécutifs k et k+1. Ceci est réalisé en multipliant, pour chaque voie $V_{ik}$ et pour chaque couple de segments consécutifs k et k+1, le nombre complexe du segment k par le nombre complexe conjugué du segment consécutif k+1. On obtient ensuite alors un nombre complexe du type r. $e^{-j\psi}{}_{k/k+1}$.

L'angle de torsion, éventuellement moyenne et pondéré par la valeur R du rapport signal sur bruit moyen R=r/B des bruiteurs est calculée, pour chaque couple de segments k et k+1, par la combinaison des relations (2) et (3), à savoir :

$$T_{k/k+1} = \sum\nolimits^{f} \sum\nolimits^{t}\ (R.\ \arccos(1/2\pi.\ \cos(\psi_{k/k+1}).\ c\ /(\ f/L))) / \sum\nolimits^{f} \sum\nolimits^{t} R$$

Il est à noter que ce traitement de forme d'antenne est réalisé en moins d'une seconde, donc quasiment en temps réel.

Les valeurs de différence d'angle de colinéarité ou de torsion peuvent donc être prises en compte au niveau du traitement, par le sonar existant 2, des signaux issus des n hydrophones, permettant d'accroître considérablement la précision du sonar lors d'une déformation substantielle de l'antenne remorquée, et ce, grâce à l'obtention de lobes secondaire faibles par rapport au lobe principal, et à un gain d'antenne accru. De surcroît, il devient possible de lever l'ambiguïté droite/gauche de l'antenne.

Pour cela, les valeurs pondérées de torsion d'antenne sont éventuellement moyennées de façon à déterminer un rayon moyen de courbure X de l'antenne, puis cette information est introduite dans les moyens de formation de voies du sonar par exemple par une distance de retard comme explicité par la relation (4).

La puissance des bruiteurs de chaque voie est ensuite traitée dans les moyens 31 et 32 dans lesquels seuls les bruiteurs présentant un rapport signal sur bruit supérieur à une certaine valeur sont conservés et visualisables sur les moyens connus de visualisation 6.

A ce stade les bruiteurs se retrouvent aussi bien dans le secteur droit que dans le secteur gauche de l'antenne et la détermination de la position, droite ou gauche, donc la levée de l'ambiguïté est déterminée par les moyens 34, par comparaison des niveaux de puissance correspondant à un même bruiteur, la puissance la plus élevée révélant le secteur réel dans lequel se trouve le bruiteur.

De nombreuses modifications peuvent être apportées aux variantes de réalisation décrites sans sortir du cadre de l'invention.

## Revendications

1. Procédé de détermination de la forme d'une antenne linéaire (3) de longueur La et tractée dans un fluide, cette antenne comportant des capteurs acoustiques (H1...Hn) répartis le long de cette antenne (3) et recevant des signaux et connectés à des moyens de traitement des signaux issus de ces capteurs, **caractérisé en ce qu'**il consiste :

   - à définir un nombre N de segments d'antenne $S_1$ à $S_N$ consécutifs de longueur respectif $L_1$ à $L_N$ avec N>=2 et préférentiellement, $\sum_{1}^{N} L(Si) >= La$,

   - à former, pour chaque segment $S_1$ à $S_N$, des voies $V_{i1}$ à $V_{iN}$ en gisement à partir des signaux des capteurs d'un même segment, de la position des capteurs sur l'antenne, de la fréquence et de la célérité des ondes dans le fluide,

   - à calculer, pour chaque couple de segments $S_k$, $S_{k+1}$, et pour chaque voie $V_{ik}$, l'interspectre en fonction du temps et de la fréquence,

   - à calculer pour chaque couple de segments $S_k$, $S_{k+1}$, et pour chaque voie $V_{ik}$, la différence d'angle de colinéarité $\Phi CO_{k/k+1}$ entre les deux segments puis à déterminer la forme complète de l'antenne à partir des différences d'angle de colinéarité ainsi calculées.

2. Procédé selon la revendication 1, **caractérisé en ce que** ladite formation de voie est une formation de voies spectrales.

3. Procédé selon la revendication 2 **caractérisé en ce que** la formation de voies par gisement est effectuée selon la relation suivante :

$$V_{ik}(f,t) = \sum_{j=1}^{n(k)} S_j(f,t) . \; e^{-j2\pi \cos(\theta_i).L.f/c}$$

   Où:

   $V_{ik}(f,t)$ est la puissance de la voie i considérée pour le segment k à la fréquence f et à l'instant t

   $S_j(f,t)$ : le signal reçu par l'hydrophone j considéré à la fréquence f et l'instant t

   $\theta_i$ est le gisement de la voie i considérée par rapport à l'avant de l'antenne

   L : la distance en mètres séparant l'hydrophone considéré d'un hydrophone constituant l'origine des distances,

   f: fréquence à laquelle la voie est recherchée,

   c : célérité du son dans le milieu dans lequel baigne l'antenne.

4. Procédé selon l'une quelconque des revendications 1 à trois, **caractérisé en ce que** chaque voie formée est sous la forme d'une suite de nombres complexes et **en ce que** l'étape de calcul, pour chaque couple de segments $S_k$, $S_{k+1}$, et pour chaque voie $V_{ik}$, de l'interspectre consiste à multiplier, pour chaque voie $V_{ik}(f,t)$ et pour chaque couple de segments consécutifs k et k+1, les nombres complexes de la voie formée du segment k par les nombres complexes conjugués de la voie formée du segment consécutif k+1 aux fréquences et instants correspondants.

**5.** Procédé selon la revendication 4, **caractérisé en ce que** le calcul pour chaque couple de segments $S_k$, $S_{k+1}$, et pour chaque voie $V_{ik}$, de la différence d'angle de colinéarité $\Phi co_{k/k+1}$ entre les deux segments consiste à extraire l'argument du résultat du produit desdits nombres complexes, cet argument $\psi_{k/k+1}$ étant fonction de la différence de phase entre les capteurs des deux segments, et à calculer la différence d'angle de colinéarité $\Phi co_{k/k+1}$ avec la relation suivante :

$$\Phi co_{k/k+1} = \arccos(1/2\pi.\,\cos(\psi_{k/k-1}).\,c\,/(\,f/Ls)) \qquad (2)$$

Où Ls est la longueur d'espacement entre les deux segments k et k+1.

**6.** Procédé selon l'une quelconque des revendications 1 à 6, **caractérisé en ce qu'**il comporte une étape consistant à pondérer, pour chaque couple de segments $S_k$, $S_{k+1}$, et pour chaque voie $V_{ik}$, la différence d'angle de colinéarité $\Phi co_{k/k+1}$ par la puissance relative des voies correspondantes.

**7.** Procédé selon la revendication 6, **caractérisé en ce qu'**il consiste à pondérer, pour chaque couple de segments $S_k$, $S_{k+1}$, et pour chaque voie $V_{ik}$, la différence d'angle de colinéarité $\Phi CO_{k/k-1}$, par la norme R du résultat du produit desdits nombres complexes.

**8.** Procédé selon l'une quelconque des revendications 6 et 7, **caractérisé en ce qu'**il comporte une étape de seuillage de la norme du résultat du produit desdits nombres complexes.

**9.** Procédé selon l'une quelconque des revendications 6 à 8, **caractérisé en ce qu'**il comporte une étape consistant à calculer, pour chaque voie, le bruit moyen sur toutes les fréquences et pour chaque fréquence le rapport signal sur bruit R.

**10.** Procédé selon l'une quelconque des revendications 1 à 9, **caractérisé en ce qu'**il comporte une étape de calcul de la torsion entre segment à partir de la relation suivante :

$$T_{k/k+1} = \sum^f \sum^t (R.\,\arccos(1/2\pi.\,\cos(\psi_{k/k+1}).\,c\,/(\,f/L))) / \sum^f \sum^t R$$

Où R est le rapport signal sur bruit moyen.

**11.** Procédé selon l'une quelconque des revendications précédentes, **caractérisé en ce qu'**il comporte une étape finale de paramétrage de la forme de l'antenne.

**12.** Procédé selon la revendication 11, **caractérisé en ce qu'**il consiste à paramétrer éventuellement la forme de l'antenne sous la forme d'un arc de cercle de rayon X à partir des valeurs des torsions $T_{k/k+1}$ calculées entre chacun des couples de segment consécutifs.

**13.** Procédé pour lever l'ambiguïté d'une antenne linéaire (3) de longueur La et tractée dans un fluide, cette antenne comportant des capteurs acoustiques (H1...Hn) répartis le long de cette antenne (3) et recevant des signaux et connectés à des moyens de traitement des signaux issus de ces capteurs, **caractérisé en ce qu'**il consiste :

- à déterminer la forme de l'antenne par la mise en oeuvre d'un procédé selon l'une quelconque des revendications 1 à 12,
- à former des voies sur des gisements situés de part et d'autre de l'antenne
- à détecter les bruiteurs,
- comparer, pour chaque bruiteur, les deux valeurs de puissance, l'une détectée d'un côté de l'antenne et l'autre de l'autre côté, puis à ne retenir que celle présentant la valeur la plus élevée, cette dernière correspondant au côté où se trouve réellement le bruiteur.

**14.** Procédé selon la revendication 13, **caractérisé en ce que** l'étape de détection des bruiteurs est effectuée par seuillage du rapport signal sur bruit.

**15.** Dispositif pour déterminer la forme d'une antenne remorquée et tractée dans un fluide, cette antenne comportant des capteurs acoustiques (H1...Hn) répartis le long de cette antenne (3) et recevant des signaux et connectés à des moyens de traitement des signaux issus de ces capteurs, **caractérisé en ce qu'**il comporte des moyens (10) de formation de voies pour au moins deux segments consécutifs ou en partie seulement confondus de l'antenne (3) et comportant chacun au moins deux capteurs acoustiques, des moyens (11) de calcul des interspectres entre ces au moins deux segments et des moyens (12) aptes à déterminer, à partir des informations contenues dans les interspectres, la différence d'angle de colinéarité entre ces au moins deux de segments.

**Patentansprüche**

**1.** Verfahren zur Bestimmung der Form einer in einem Fluid geschleppten linearen Antenne (3) der Länge La, wobei diese Antenne akustische Sensoren (H1...Hn) umfasst, die längs dieser Antenne (3) verteilt sind und Signale empfangen und an Mittel zur Verarbeitung der von diesen Sensoren kommenden Signale angeschlossen sind, **dadurch gekennzeichnet, dass** es darin besteht,

- dass eine Anzahl N von aufeinanderfolgenden Antennensegmenten $S_1$ bis $S_N$ jeweils mit der Länge $L_1$ bis $L_N$ definiert wird, wobei N>=2 und vorzugsweise $\sum_{1}^{N} L(Si) >= La,$

- dass bei jedem Segment $S_1$ bis $S_N$ Seitenwinkelkanäle $V_{i1}$ bis $V_{iN}$ ausgehend von den Signalen der Fühler ein und desselben Segments, von der Lage der Sensoren auf der Antenne, von der Frequenz und von der Fortpflanzungsgeschwindigkeit der Wellen in dem Fluid gebildet werden,
- dass bei jedem Paar von Segmenten $S_k$, $S_{k+1}$ und bei jedem Kanal $V_{ik}$ das Kreuzspektrum in Abhängigkeit von der Zeit und der Frequenz errechnet wird,
- dass bei jedem Paar von Segmenten $S_k$, $S_{k+1}$ und bei jedem Kanal $V_{ik}$ die Kolinearitätswinkeldifferenz $\Phi co_{k/k+1}$ zwischen den beiden Segmenten errechnet wird und dann die vollständige Form der Antenne ausgehend von den einzelnen auf diese Weise berechneten Kolinearitätswinkeldifferenzen bestimmt wird.

**2.** Verfahren nach Anspruch 1, **dadurch gekennzeichnet, dass** diese Kanalbildung eine Bildung von Spektralkanälen ist.

**3.** Verfahren nach Anspruch 2, **dadurch gekennzeichnet, dass** die Bildung von Kanälen durch Seitenwinkel nach der folgenden Gleichung durchgeführt wird:

$$V_{ik}(f,t) = \sum_{j=1}^{n(k)} S_j(f,t).e^{-j2\pi \cos(\theta_i).L.f/c}$$

in der:

$V_{ik}(f,t)$ die Leistung des betreffenden Kanals i bei dem Segment k bei der Frequenz f und zum Zeitpunkt t ist
$S_j(f,t)$: das von dem betreffenden Hydrophon j empfangene Signal mit der Frequenz f und zum Zeitpunkt t
$\theta_i$ der Seitenwinkel des betreffenden Kanals i bezüglich des vorderen Teils der Antenne ist,
L: der Abstand in Metern des betreffenden Hydrophons von einem den Nullpunkt der Abstände bildenden Hydrophon,
f: Frequenz, bei der der Kanal gesucht wird,
c: Fortpflanzungsgeschwindigkeit des Schalls in dem Medium, in dem die Antenne badet.

**4.** Verfahren nach einem der Ansprüche 1 bis 3, **dadurch gekennzeichnet, dass** jeder gebildete Kanal in Form einer Folge von komplexen Zahlen vorliegt und dass der Rechenschritt für jedes Paar von Segmenten $S_k$, $S_{k+1}$ und für jeden Kanal $V_{ik}$ des Kreuzspektrums darin besteht, dass für jeden Kanal $V_{ik}(f,t)$ und für jedes Paar von aufeinanderfolgenden Segmenten k und k+1 die komplexen Zahlen des gebildeten Kanals des Segments k mit den zugeordneten komplexen Zahlen des gebildeten Kanals des folgenden Segments k+1 bei den entsprechenden Frequenzen und Zeiten multipliziert wird.

5. Verfahren nach Anspruch 4, **dadurch gekennzeichnet, dass** die Berechnung der Kolinearitätswinkeldifferenz $\Phi CO_{k/k+1}$ zwischen den Segmenten bei jedem Paar von Segmenten $S_k$, $S_{k+1}$ und bei jedem Kanal $V_{ik}$ darin besteht, dass das Argument aus dem Ergebnis des Produkts dieser komplexen Zahlen extrahiert wird, wobei dieses Argument $\psi_{k/k+1}$ eine Funktion der Phasendifferenz zwischen den Sensoren der beiden Segmente ist, und dass die Kolinearitätswinkeldifferenz $\Phi CO_{k/k+1}$ mit der folgenden Gleichung berechnet wird:

$$\Phi CO_{k/k+t} = \arccos(1/2\pi.\cos(\psi_{k/k+1}).c/(f/Ls)) \qquad (2)$$

worin Ls die Zwischenraumlänge zwischen den beiden Segmenten k und k+1 ist.

6. Verfahren nach einem der Ansprüche 1 bis 6, **dadurch gekennzeichnet, dass** es einen Schritt umfasst, der darin besteht, dass bei jedem Paar von Segmenten $S_k$, $S_{k+1}$ und bei jedem Kanal $V_{ik}$ die Kolinearitätswinkeldifferenz $\Phi CO_{k/k+1}$ durch die relative Leistung der entsprechenden Kanäle gewichtet wird.

7. Verfahren nach Anspruch 6, **dadurch gekennzeichnet, dass** es darin besteht, dass bei jedem Paar von Segmenten $S_k$, $S_{k+1}$ und bei jedem Kanal $V_{ik}$ die Kolinearitätswinkeldifferenz $\Phi CO_{k/k+1}$ durch die Norm R des Ergebnisses des Produkts dieser komplexen Zahlen gewichtet wird.

8. Verfahren nach einem der Ansprüche 6 und 7, **dadurch gekennzeichnet, dass** es einen Schritt der Schwellenwertbildung für die Norm des Ergebnisses des Produkts dieser komplexen Zahlen umfasst.

9. Verfahren nach einem der Ansprüche 6 bis 8, **dadurch gekennzeichnet, dass** es einen Schritt umfasst, der darin besteht, dass bei jedem Kanal das mittlere Rauschen auf allen Frequenzen und bei jeder Frequenz das Signal-Rausch-Verhältnis R errechnet wird.

10. Verfahren nach einem der Ansprüche 1 bis 9, **dadurch gekennzeichnet, dass** es einen Schritt der Berechnung der Verwindung zwischen Segmenten ausgehend von der folgenden Gleichung umfasst:

$$T_{k/k+1} = \sum{}^{f}\sum{}^{t}(R.\arccos(1/2\pi.\cos(\psi_{k/k+1}).c/(f/L)))/\sum{}^{f}\sum{}^{t}R$$

worin R das Verhältnis Signal zu mittlerem Rauschen ist.

11. Verfahren nach einem der vorhergehenden Ansprüche, **dadurch gekennzeichnet, dass** es einen Endschritt der Parametrierung der Form der Antenne umfasst.

12. Verfahren nach Anspruch 11, **dadurch gekennzeichnet, dass** es darin besteht, dass die Form der Antenne gegebenenfalls in der Form eines Kreisbogens mit dem Radius X ausgehend von den errechneten Werten der Verwindungen $T_{k/k+1}$ zwischen jedem der aufeinanderfolgenden Segmentpaare parametriert wird.

13. Verfahren zur Beseitigung der Mehrdeutigkeit einer in einem Fluid geschleppten linearen Antenne (3) der Länge La, wobei diese Antenne akustische Sensoren (H1...Hn) umfasst, die längs dieser Antenne (3) verteilt sind und Signale empfangen und an Mittel zur Verarbeitung der von diesen Sensoren kommenden Signale angeschlossen sind, **dadurch gekennzeichnet, dass** es darin besteht,

- dass die Form der Antenne mit Hilfe eines Verfahrens nach einem der Ansprüche 1 bis 12 bestimmt wird,
- dass auf zu beiden Seiten der Antenne gelegenen Seitenwinkeln Kanäle gebildet werden,
- dass die Geräuschquellen erfasst werden,
- dass für jede Geräuschquelle die beiden Leistungswerte verglichen werden, deren einer auf einer Seite der Antenne und deren anderer auf der anderen Seite erfasst wird, und dann nur der jenige genommen wird, der den höheren Wert besitzt, wobei dieser der Seite entspricht, auf der sich die Geräuschquelle tatsächlich befindet.

14. Verfahren nach Anspruch 13, **dadurch gekennzeichnet, dass** der Schritt der Erfassung der Geräuschquellen durch Schwellenwertbildung für das Signal-Rausch-Verhältnis durchgeführt wird.

15. Vorrichtung zur Bestimmung der Form einer in einem Fluid geschleppten Schleppantenne, wobei diese Antenne akustische Sensoren (H1...Hn) umfasst, die längs dieser Antenne (3) verteilt sind und Signale empfangen und an Mittel zur Verarbeitung der von diesen Sensoren kommenden Signale angeschlossen sind, **dadurch gekennzeichnet, dass** sie Mittel (10) zur Bildung von Kanälen für mindestens zwei aufeinanderfolgende oder nur zum Teil zusammenfallende Segmente der Antenne (3) umfassen, die jeweils mindestens zwei akustische Sensoren, Mittel (11) zur Berechnung der Kreuzspektren zwischen diesen mindestens zwei Segmenten und Mittel (12), die ausgehend von den in den Kreuzspektren enthaltenen Informationen die Kolinearitätswinkeldifferenz zwischen diesen mindestens zwei Segmenten bestimmen können, umfassen.

**Claims**

1. Method of determining the shape of a linear antenna (3) of length La and towed in a fluid, this antenna including acoustic sensors (H1...Hn) which are distributed along this antenna (3) and receive signals and are connected to means of processing the signals coming from these sensors, **characterised in that** it consists in:

 - defining a number N of consecutive antenna segments $S_1$ to $S_N$ of respective length $L_1$ to $L_N$ with N>=2 and, by preference,

$$\sum_{1}^{N} L(Si) >= La,$$

 - forming, for each segment $S_1$ to $S_N$, channels $V_{i1}$ to $V_{iN}$ as relative bearings from signals from sensors of the same segment, from the position of the sensors on the antenna, from the frequency and from the propagation speed of the waves in the fluid,
 - calculating the interspectrum for each pair of segments $S_k$, $S_{k+1}$, and for each channel $V_{ik}$, as a function of the time and the frequency,
 - calculating, for each pair of segments $S_k$, $S_{k+1}$, and for each channel $V_{ik}$, the difference in the colinearity angle $\Phi co_{k/k+1}$ between the two segments, then determining the complete shape of the antenna from the differences in colinearity angle thus calculated.

2. Method according to claim 1, **characterised in that** said channel formation is a formation of spectral channels.

3. Method according to claim 2, **characterised in that** forming channels by means of relative bearings is carried out according to the following relationship:

$$V_{ik}(f,t) = \sum_{j=1}^{n(k)} S_j(f,t) \cdot e^{-j2\pi \cos(\theta_i) \cdot L \cdot f/c}$$

where:

 $V_{ik}(f, t)$ is the power of the channel i in question for segment k at frequency f and at moment t,
 $S_j(f,t)$ is the signal received by the hydrophone j in question at frequency f and at moment t,
 $\theta_i$ is the relative bearing of the channel i in question in relation to the front of the antenna,
 L: the distance in metres separating the hydrophone in question from a hydrophone constituting the origin of the distances,
 f: frequency at which the channel is sought,

c: propagation speed of the sound in the medium in which the antenna is immersed.

4. Method according to any one of claims 1 to 3, **characterised in that** each channel formed is in the form of a sequence of complex numbers and **in that** the step of calculating the interspectrum for each pair of segments $S_k$, $S_{k+1}$, and for each channel $V_{ik}$, consists in multiplying, for each channel $V_{ik}(f,t)$ and for each pair of consecutive segments k and k+1, the complex numbers of the formed channel of segment k by the conjugate complex numbers of the formed channel of the consecutive segment k+1 at the corresponding frequencies and moments.

5. Method according to claim 4; **characterised in that** calculating for each pair of segments $S_k$, $S_{k+1}$, and for each channel $V_{ik}$, the difference in colinearity angle $\Phi CO_{k/k+1}$ between the two segments consists in extracting the phase angle from the result of the product of said complex numbers, this phase angle $\psi_{k/k+1}$ being a function of the phase difference between the sensors of the two segments, and in calculating the difference in colinearity angle $\Phi CO_{k/k+1}$ using the following relationship:

$$\Phi co_{k/k+1} = \arccos(1/2\pi. \cos(\psi_{k/k+1}). c /( f/Ls))$$ (2)

where Ls is the length of the spacing between the two segments k and k+1.

6. Method according to any one of claims 1 to 6, **characterised in that** it includes a step consisting in weighting, for each pair of segments $S_k$, $S_{k+1}$, and for each channel $V_{ik}$, the difference in colinearity angle $\Phi co_{k/k+1}$ by the relative power of the corresponding channels.

7. Method according to claim 6, **characterised in that** it consists in weighting, for each pair of segments $S_k$, $S_{k+1}$, and for each channel $V_{ik}$, the difference in colinearity angle $\Phi CO_{k/k-1}$ by the norm R of the result of the product of said complex numbers.

8. Method according to any one of claims 6 and 7, **characterised in that** it includes a step of thresholding the norm of the result of the product of said complex numbers.

9. Method according to any one of claims 6 to 8, **characterised in that** it includes a step consisting in calculating, for each channel, the mean noise on all the frequencies and for each frequency the signal-to-noise ratio R.

10. Method according to any one of claims 1 to 9, **characterised in that** it includes a step of calculating the inter-segment torsion from the following relationship:

$$T_{k/k+1} = \sum^f \sum^t (R. \arccos(1/2\pi. \cos(\psi_{k/k+1}). c /( f/L))) / \sum^f \sum^t R$$

where R is the mean signal-to-noise ratio.

11. Method according to any one of the preceding claims, **characterised in that** it includes a final step of parameterisation of the shape of the antenna.

12. Method according to claim 11, **characterised in that** it consists in parameterising if necessary the shape of the antenna in the shape of an arc of a circle of radius X from torsion values $T_{k/k+1}$ calculated between each of the pairs of consecutive segments.

13. Method for removing the ambiguity from a linear antenna (3) of length La and towed in a fluid, this antenna including acoustic sensors (H1...Hn) distributed along this antenna (3) and receiving signals and connected to means of processing the signals coming from these sensors, **characterised in that** it consists in:

- determining the shape of the antenna by implementing a method according to any one of claims 1 to 12,
- forming channels on relative bearings situated on either side of the antenna,
- detecting the acoustic devices,

- comparing, for each acoustic device, the two power values, the one detected on the one side of the antenna and the other on the other side, then only retaining the one which has the higher value, the latter corresponding to the side where the acoustic device is really located.

**14.** Method according to claim 13, **characterised in that** the step of detecting the acoustic devices is carried out by thresholding the signal-to-noise ratio.

**15.** Device for determining the shape of an antenna towed in a fluid, this antenna including acoustic sensors (H1...Hn) which are distributed along this antenna (3) and receive signals and are connected to means for processing the signals coming from these sensors, **characterised in that** it includes means (10) for forming channels for at least two consecutive, or partially only merged, segments of the antenna (3) and each including at least two acoustic sensors, means (11) for calculating the interspectra between these at least two segments and means (12) capable of determining, from the information contained in the interspectra, the difference in colinearity angle between these at least two segments.

FIG.1

FIG.2

FIG.3

FIG.4

FIG. 5